# EUROPÄISCHE PATENTANMELDUNG

(11) **EP 4 810 416 A1**
(43) Veröffentlichungstag der Anmeldung: **23.09.2026**
(21) Anmeldenummer: 26164904.0
(22) Anmeldetag: 16.03.2026
(51) Int. Cl.: B65G 47/86, B67B 3/20, B67C 3/24

(54) **KLAMMEREINRICHTUNG**

(30) Priorität: 18.03.2025 DE 102025110481
(71) Anmelder: Krones AG, 93073 Neutraubling (DE)
(72) Erfinder: SCHOENFELDER, Markus, 93073 Neutraubling (DE)
(74) Vertreter: v. Bezold & Partner Patentanwälte - PartG mbB

(57) **Zusammenfassung**

Die Erfindung betrifft u.a. eine Klammereinrichtung (14) zum Halten eines Behälters (B) für eine Behältertransport- und/oder Behälterbehandlungsvorrichtung (10). Die Klammereinrichtung (14) weist ein Klammerarmpaar (16, 18) mit zwei Klammerarmen (16, 18) zum unterseitigen Abstützen eines Tragrings (T) des Behälters (B) zum Halten des Behälters (B) auf. Die zwei Klammerarme (16, 18) sind in einer gemeinsamen Klammerarmebene bewegbar. Die Klammereinrichtung (14) weist ferner einen Eingreifarm (40) auf, der zwischen den zwei Klammerarmen (16, 18) angeordnet ist und mindestens ein Eingreifelement (42) aufweist. Der Eingreifarm (40) ist zum Eingreifen des mindestens einen Eingreifelements (42) von unten in den Tragring (T) des von dem Klammerarmpaar (16, 18) gehaltenen Behälters (B) zum Verdrehsichern des Behälters (B) bewegbar.

## Beschreibung

### Technisches Gebiet

Die Erfindung betrifft eine Klammereinrichtung und eine Behälterbehandlungsvorrichtung mit einer Klammereinrichtung. Die Erfindung betrifft ferner ein zugehöriges Verfahren.

### Technischer Hintergrund

Beispielsweise offenbart die DE 10 2020 114 905 A1 eine Vorrichtung zum Halten eines Behälters in einer Behälterbehandlungsvorrichtung, umfassend zwei in einer Schwenkebene relativ zueinander schwenkbare Greifarme, welche jeweils einen Halteabschnitt zum Halten des zu haltenden Behälters aufweisen. Eine Hubstange / Steuerstange ist derart mit den Greifarmen gekoppelt, dass durch ein Verschieben der Hubstange senkrecht zur Schwenkebene der Greifarme die Halteabschnitte relativ zueinander verschwenkbar sind. Die Greifarme sind jeweils um eine Schwenkachse, ausgebildet über eine mechanische Welle, schwenkbar an einer Halterung angeordnet.

Die US 11 772 949 B2 betrifft eine Vorrichtung zum Halten einer tragringlosen Flasche zum Aufbringen eines Schraubverschlusses, umfassend einen Träger und eine am Träger angeordnete Halteanordnung. Die Halteanordnung ist zwischen einer geschlossenen Position zum Halten des Behälters und einer geöffneten Position zum Freigeben des Behälters relativ zum Träger bewegbar. Die Halteanordnung umfasst einen kragenförmigen Stützvorsprung zum Stützen des Behälters an einem Sicherungsring des Behälters. Der kragenförmige Stützvorsprung umfasst einen Stützvorsprungbereich eines ersten Haltearms und einen Stützvorsprungbereich eines zweiten Haltearms. Der erste Haltearm und der zweite Haltearm sind zum Bewegen zwischen der geöffneten Position und der geschlossenen Position zueinander verschwenkbar an dem Träger angeordnet.

Zum weiteren Stand der Technik wird auf die DE 10 2022 122 939 A1, JP 6874480 B2, US 2011/0131924 A1 und US 6 692 050 B2 hingewiesen.

Nachteilig am bekannten Stand der Technik kann sein, dass Behälter erforderlich sind, die im Hals-/ Neckbereich sehr stabil sind, um den Spikes zu widerstehen, die das Drehmoment beim Aufschrauben eines Verschlusses auf den Behälter abstützen. Je dünnwandiger der Behälter ist, desto höher ist das Risiko des Durchstechens der Behälterwand mittels der Spikes. Dies kann den Verlust von CO2 aus dem Produkt zur Folge haben. Auch können die Spikes im Hals- / Neckbereich zu auffälligen und unschönen Beschädigungen der Behälteroberfläche führen.

Der Erfindung liegt die Aufgabe zu Grunde, eine verbesserte Technik zum Halten von Behältern zu schaffen. Vorzugsweise soll die Technik eine sichere Drehmomentabstützung, z. B. beim Verschließen, des Behälters ermöglichen, ohne dass die Notwendigkeit von großen Behälterwandstärken besteht und ohne dass es zu auffälligen und unschönen Beschädigungen der Behälteroberfläche kommt.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Klammereinrichtung, vorzugsweise Neckhandling-Klammereinrichtung, zum Halten eines Behälters (z. B. Flasche, z. B. PET-Flasche) für eine Behältertransport- und/oder Behälterbehandlungsvorrichtung. Die Klammereinrichtung weist ein Klammerarmpaar mit zwei Klammerarmen zum unterseitigen Abstützen eines Tragrings des Behälters zum Halten des Behälters auf. Die zwei Klammerarme sind in einer gemeinsamen Klammerarmebene (z. B. zum Öffnen und Schließen der Klammereinrichtung) bewegbar, vorzugsweise schwenkbar. Die Klammereinrichtung weist einen Eingreifarm auf, der zwischen den zwei Klammerarmen angeordnet ist und mindestens ein Eingreifelement aufweist. Der Eingreifarm ist zum Eingreifen, vorzugsweise Einschneiden, des mindestens einen Eingreifelements von unten in den Tragring des von dem Klammerarmpaar gehaltenen Behälters zum Verdrehsichern des Behälters bewegbar, vorzugsweise schwenkbar.

Vorteilhaft ermöglicht die Klammereinrichtung, dass ein zusätzlicher Eingreifarm mit seinem mindestens einen Eingreifelement von unten in den Tragring eindringt, um ein Drehmoment, z. B. beim Verschließen, gegenzuhalten bzw. um den Behälter verdrehsicher zu halten. Die Eingriffsstelle(n) des mindestens einen Eingreifelements ist (sind) vorteilhaft lediglich an einer Unterseite des Tragrings positioniert und damit an einer sehr robusten Stelle des Behälters und optisch unauffällig und damit nicht sichtbar für den Kunden. Die Technik ist bei sehr schweren und stabilen Behältern einsetzbar, aber auch bei leichten und dünnwandigen Behältern. Da vorteilhaft nur in den Tragring eingegriffen wird, spielt die Festigkeit des Behälters keine Rolle mehr. Da die Eingriffsstelle(n) nicht die Behälterwand beschädigt (beschädigen) und damit keine Sollbruchstelle(n) mehr besteht (bestehen), besteht auch kein Risiko mehr für ein Bersten des Behälters aufgrund eines hohen Behälterinnendrucks durch z. B. Stickstoffzugabe oder CO2.

Vorzugsweise ist die Klammereinrichtung zum Bewegen, vorzugsweise Schwenken, der zwei Klammerarme betätigbar.

Bevorzugt ist die Klammereinrichtung zum Bewegen, vorzugsweise Schwenken, des Eingreifarms betätigbar.

In einem Ausführungsbeispiel ist mindestens eines erfüllt von:
- die zwei Klammerarme sind um mindestens eine vertikale Schwenkachse der Klammereinrichtung schwenkbar,
- der Eingreifarm ist um (mindestens) eine horizontale Schwenkachse der Klammereinrichtung schwenkbar; und
- der Eingreifarm ist in einer Bewegungsebene bewegbar, die angewinkelt, vorzugsweise senkrecht, zu der Klammerarmebene ist.

Vorteilhaft können die zwei Klammerarme den Behälter somit sicher seitlich am Tragring halten. Der Eingreifarm kann vorteilhaft von unten in den Tragring bewegt, vorzugsweise geschwenkt, werden. Vorteilhaft kann damit eine besonders sichere Halterung und Drehmomentabstützung des Behälters erreicht werden.

In einem weiteren Ausführungsbeispiel ist mindestens eines erfüllt von:
- die zwei Klammerarme sind zum Ergreifen des Behälters aufeinander zubewegbar (z. B. hin zueinander schwenkbar / gegensinnig schwenkbar), ohne dass der Eingreifarm bewegt wird; und
- der Eingreifarm ist zum Eingreifen des mindestens einen Eingreifelements in den Tragring bewegbar (z. B. schwenkbar), wenn die zwei Klammerarme in einer Schließstellung sind.

Vorteilhaft kann damit ermöglicht werden, dass der Behälter zunächst mittels der Klammerarme übernommen und sicher gehalten werden kann, um dann das mindestens eine Eingreifelement mittels des Eingreifarms in den Tragring zu bewegen.

In einer Ausführungsform sind der Eingreifarm und die zwei Klammerarme unabhängig voneinander bewegbar. Alternativ sind der Eingreifarm und die zwei Klammerarme, vorzugsweise mittels einer Steuerstange, derart mechanisch miteinander gekoppelt, dass die zwei Klammerarme in eine Schließstellung bewegbar sind, bevor sich der Eingreifarm zum Eingreifen des mindestens einen Eingreifelements von unten in der Tragring bewegt. Vorteilhaft kann damit eine verzögerte Bewegung des Eingreifarms zu den Klammerarmen ermöglicht werden.

In einer weiteren Ausführungsform ist mindestens eines erfüllt von:
- der Eingreifarm ist mittig zwischen den zwei Klammerarmen angeordnet;
- das mindestens eine Eingreifelement ist ein Spike oder ein Schneidelement (z. B. Schneidplatte oder Schneidmesser);
- das mindestens eine Eingreifelement ist nach oben gerichtet;
- das mindestens eine Eingreifelement ist an einem freien Ende des Eingreifarms angeordnet;
- der Eingreifarm weist einen lösbaren Einsatz mit dem mindestens einen Eingreifelement auf, wobei vorzugsweise der Einsatz lösbar in einer Aufnahme des Eingreifarms befestigt ist, bevorzugt mittels einer Verschraubung; und
- der Eingreifarm weist einen im Wesentlichen (z. B. rechteck-) rahmenförmigen Abschnitt auf, der, vorzugsweise rahmeninnenseitig, schwenkbar gelagert ist und/oder der zwei Wellen zum Schwenken der zwei Klammerarme und/oder zwei Verbindungskörper zum Verbinden der zwei Klammerarme mit zwei Wellen zum Schwenken der zwei Klammerarme umgibt.

Vorteilhaft kann auf diese Weise eine sichere Verdrehsicherung / Drehmomentabstützung durch das mindestens eine Eingreifelement, das von unten in den Tragring eingreift, ermöglicht werden. Der lösbare Einsatz kann vorteilhaft einen besonders einfachen Austausch des mindestens einen Eingreifelements ermöglichen (z. B. um verschlissene Eingreifelemente auszuwechseln), ohne dass dafür eine aufwendige Demontage des gesamten Eingreifarms und der damit verbundenen Bauteile erforderlich ist. Vorteilhaft kann der rahmenförmige Abschnitt eine Montage und Demontage erleichtern und einen vereinfachten Aufbau der Klammereinrichtung ermöglichen.

In einer Ausführungsvariante ist der Eingreifarm bewegbar, vorzugsweise schwenkbar, von unten an einem Trägerteil der Klammereinrichtung (z. B. zur Montage der Klammereinrichtung) getragen. Vorteilhaft kann damit eine montagefreundliche und zuverlässige Aufhängung des Eingreifarms ermöglicht werden, die auf einfache Weise die bevorzugte Schwenkbarkeit des Eingreifarms ermöglichen kann.

In einer weiteren Ausführungsvariante weisen die zwei Klammerarme jeweils einen, vorzugsweise gekrümmten, Stützabschnitt zum unterseitigen Abstützen des Tragrings (und z. B. zum seitlichen Abstützen eines Halses des Behälters direkt unterhalb des Tragrings) auf.

In einem Ausführungsbeispiel ist mindestens eines erfüllt von:
- die Stützabschnitte weisen jeweils eine oberseitige, vorzugsweise plane, (z. B. schneidelementfreie und spikefreie) Stützfläche zum unterseitigen Abstützen des Tragrings auf;
- die Stützabschnitte weisen jeweils (z. B. innenseitig) eine vertikal ausgerichtete (z. B. schneidelementfreie und spikefreie) Kontaktfläche zum Kontaktieren eines Halsbereichs des Behälters direkt unterhalb des Tragrings auf;
- die Stützabschnitte sind jeweils ringsegmentförmig;
- die Stützabschnitte sind schneidelementfrei und spikefrei;
- die Stützabschnitte sind jeweils zum abschnittsweisen Umgreifen eines Halsbereichs des Behälters direkt unterhalb des Tragrings geformt.

Vorteilhaft kann der Behälter an seinem Tragring somit sicher von den Klammerarmen gehalten werden. Vorteilhaft greifen die Klammerarme dabei nicht in den Behälter ein und beschädigen diesen.

Vorzugsweise können die Kontaktflächen jeweils zylindermantelsegmentförmig oder konusmantelsegmentförmig sein.

In einem weiteren Ausführungsbeispiel weist die Klammereinrichtung ferner eine, vorzugsweise vertikal, bewegbare Steuerstange auf, die mit den zwei Klammerarmen zum Bewegen, vorzugsweise Schwenken, der zwei Klammerarme mechanisch gekoppelt oder koppelbar ist (z. B. zum gemeinsamen, vorzugsweise gegensinnigen Bewegen, vorzugsweise Schwenken) und/oder die mit dem Eingreifarm zum Bewegen, vorzugsweise Schwenken, des Eingreifarms mechanisch gekoppelt oder koppelbar ist. Vorteilhaft kann die Steuerstange eine Kopplung der Klammerarme und des Eingreifarms ermöglichen, sodass die gewünschten Bewegungsabläufe und Verzögerungen zur Behälterübernahme mittels der Klammerarme und anschließenden Verdrehsicherung mittels des Eingreifarms zuverlässig mechanisch gesteuert sind.

In einer Ausführungsform ist der Eingreifarm mittels eines Hebelmechanismus, vorzugsweise einarmiger oder zweiarmiger Hebelmechanismus, der Klammereinrichtung schwenkbar. Vorzugsweise kann der Eingreifarm einen Hebelarm des Hebelmechanismus bilden. Vorteilhaft kann damit eine bauraumsparende und auf einfache Weise betätigbare Technik zum bevorzugten Verschwenken des Eingreifarms bereitgestellt werden.

In einer weiteren Ausführungsform ist der Hebelmechanismus mittels eines linear bewegbaren Stößels der Klammereinrichtung betätigbar. Vorteilhaft kann der Stößel eine zuverlässige Betätigung des Eingreifarms ermöglichen, die toleranzbedingt vorhandenes Spiel beim Bewegen zum Hebelmechanismus einfach überbrücken kann.

In einer Ausführungsvariante ist mindestens eines erfüllt von:
- der Stößel ist an einem dem Eingreifarm entgegengesetzten Ende des Hebelmechanismus angeordnet;
- der Stößel ist oberhalb von dem Hebelmechanismus angeordnet;
- der Stößel ist ein (z. B. unterer) Endbereich einer Steuerstange der Klammereinrichtung;
- der Stößel ist entlang einer Vertikalachse linear bewegbar;
- der Stößel ist von oben auf ein Ende des Hebelmechanismus zum Schwenken des Hebelmechanismus bewegbar; und
- der Stößel ist gelenkig mit dem Hebelmechanismus verbunden (z. B. endseitig); und
- der Stößel ist mit einer, vorzugsweise schalenförmigen oder kugelsegmentförmigen, Lagerpfanne, die mit dem Eingreifarm (z. B. starr) verbunden ist, in Eingriff bringbar.

Vorteilhaft kann auf diese Weise eine besonders geeignete Anordnung und Konfiguration des Stößels erreicht werden.

In einer weiteren Ausführungsvariante ist der Eingreifarm mittels eines Schwenkmechanismus mit mindestens einem Tragelement verbunden (z. B. zum Schwenken um eine Horizontalachse). Der Schwenkmechanismus ist mittels mindestens eines hülsenförmigen elastischen Elements, vorzugsweise Torsionsbalgs, abgedichtet. Vorteilhaft kann somit eine besonders hygienische Schwenklagerung für den Eingreifarm bereitgestellt werden.

Ein weiterer Aspekt betrifft eine (z. B. Rundläufer-) Behälterbehandlungsvorrichtung, vorzugsweise (z. B. Rundläufer-) Behälterverschließvorrichtung zum Verschließen von Behältern (z. B. Flaschen, z. B. PET-Flaschen). Die Behälterbehandlungsvorrichtung weist mindestens eine Behandlungsstation, vorzugsweise Verschließstation, mit einer Behandlungseinrichtung, vorzugsweise einem Verschließerkopf, und einer Klammereinrichtung wie hierin offenbart auf. Vorzugsweise kann die Klammereinrichtung zum zentrierten Positionieren des Behälters unterhalb von der Behandlungseinrichtung angeordnet (und ausgebildet) sein.

Vorteilhaft können mit der Behälterbehandlungsvorrichtung die gleichen Vorteile erzielt werden, die bereits unter Bezugnahme auf die Klammereinrichtung erläutert wurden. Vorteilhaft wird durch das seitliche Greifen mittels der Klammerarme zusätzlich ermöglicht, dass die Klammereinrichtung mit einem Verschließerkopf, der ohne Kopfdruck verschließt, zusammenarbeiten kann.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Klammereinrichtung wie hierin offenbart oder die Behälterbehandlungsvorrichtung wie hierin offenbart aufweisen. Die Behälterbehandlungsanlage kann beispielsweise eine Getränkeabfüllanlage sein.

Ein weiterer Aspekt betrifft ein Verfahren zum Betreiben einer Klammereinrichtung wie hierin offenbart oder einer Behälterbehandlungsvorrichtung wie hierin offenbart. Das Verfahren weist auf:
- Halten eines Behälters (z. B. Flasche, z. B. PET-Flasche) an einem Tragring, vorzugsweise Halsring, des Behälters mittels der Klammereinrichtung, wobei die zwei Klammerarme den Tragring von unten (z. B. mittels der Stützflächen) abstützen (und optional seitlich im Halsbereich direkt unterhalb des Tragrings abstützen, z. B. mittels der Kontaktflächen); und
- Eingreifen, vorzugsweise Einschneiden, des mindestens einen Eingreifelements von unten in den Tragring des (bereits) gehaltenen Behälters mittels Bewegens, vorzugsweise Schwenkens, des Eingreifarms hin zu dem Tragring, vorzugsweise zum Verdrehsichern des gehaltenen Behälters.

Vorteilhaft können mit dem Verfahren die gleichen Vorteile erzielt werden, die hierin bereits unter Bezugnahme auf die Klammereinrichtung und die Behälterbehandlungsvorrichtung erläutert wurden. Selbiges gilt für die untenstehend erläuterten bevorzugten Ausführungsbeispiele des Verfahrens.

In einem Ausführungsbeispiel weist das Verfahren ferner mindestens eines auf von:
- Behandeln, vorzugsweise Verschließen, des Behälters, in dessen Tragring das mindestens eine Eingreifelement eingreift, vorzugsweise einschneidet, mittels einer Behandlungseinrichtung, vorzugsweise eines Verschließerkopfes; und
- Wegbewegen, vorzugsweise Wegschwenken, des Eingreifarms von dem Tragring nach einem Behandeln des Behälters zum Entfernen des mindestens einen Eingreifelements aus dem Tragring, vorzugsweise bevor die zwei Klammerarme zum Freigeben des Behälters bewegt werden; und
- Abdichten eines Schwenkmechanismus, der den Eingreifarm (z. B. um eine Horizontalachse) schwenkbar an mindestens einem Tragelement lagert, mittels mindestens eines hülsenförmigen elastischen Elements, vorzugsweise eines Torsionsbalgs.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behältertransport- und/oder Behälterbehandlungsvorrichtung gemäß einem Ausführungsbeispiel;
- Figur 2: eine perspektivische Seitenansicht eines Abschnitts einer beispielhaften Behandlungsstation mit einer Klammereinrichtung gemäß einem Ausführungsbeispiel und einer rein schematisch dargestellten Behandlungseinrichtung;
- Figur 3: eine perspektivische Ansicht von oben auf die beispielhafte Klammereinrichtung in einer Schließstellung (ohne Behälterdarstellung);
- Figur 4: eine Seitenansicht der beispielhaften Klammereinrichtung beim Halten eines Behälters;
- Figur 5: eine Seitenansicht der beispielhaften Klammereinrichtung beim Halten eines Behälters und beim Eingreifen in einen Tragring des Behälters;
- Figur 6: eine perspektivische Ansicht von oben auf eine beispielhafte Klammereinrichtung in einer Schließstellung (ohne Behälterdarstellung);
- Figur 7: eine Schnittansicht der beispielhaften Klammereinrichtung von Figur 6;
- Figur 8: eine Schnittansicht einer beispielhaften Klammereinrichtung; und
- Figur 9: eine weitere Schnittansicht der beispielhaften Klammereinrichtung von Figur 8.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

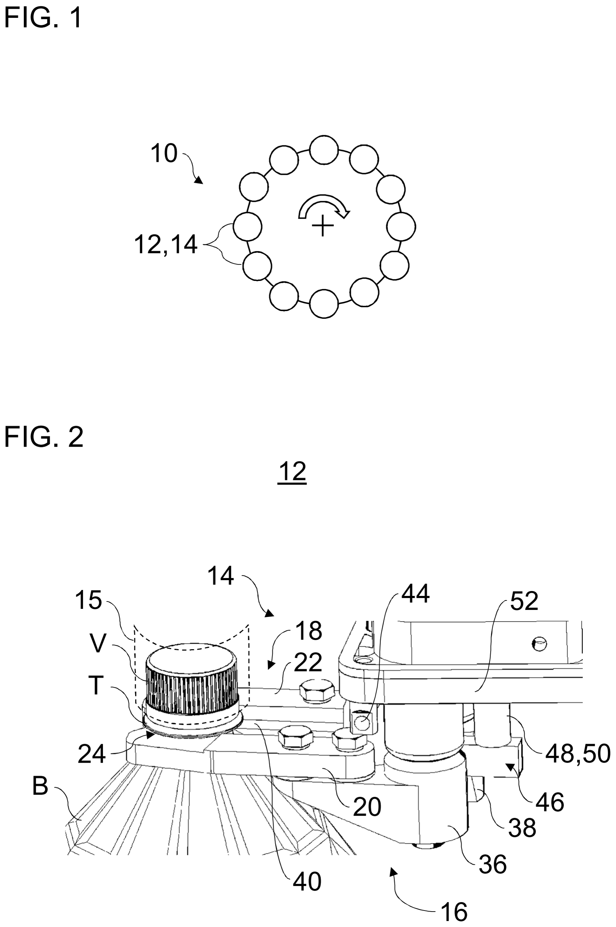

Die Figur 1 zeigt rein schematisch eine Behältertransport- und/oder Behälterbehandlungsvorrichtung 10. Die Vorrichtung 10 kann bevorzugt als eine Rundläufer-Vorrichtung bzw. in Karussellbauart oder als Linear-Vorrichtung ausgeführt sein.

Bevorzugt weist die Vorrichtung 10 mehrere Stationen 12 zum gleichzeitigen bzw. zeitlich überlappenden Handhaben und ggf. Behandeln mehrerer Behälter auf. Bevorzugt sind die Stationen 12 Behandlungsstationen, an/in denen die Behälter behandelt, z. B. verschlossen, werden. Die Stationen 12 können verteilt um einen Umfang der als Karussell bzw. Rundläufer ausgeführten Vorrichtung 10 herum angeordnet sein. Das Karussell bzw. die Rundläufervorrichtung kann um eine vertikale Hauptdrehachse der Vorrichtung 10 drehbar sein. Jede Station 12 kann eine Klammereinrichtung 14 aufweisen.

Besonders bevorzugt ist die Vorrichtung 10 eine Verschließvorrichtung zum Verschließen von Behältern, z. B. mit einem Deckel, einem Korken, einem Kronkorken oder einem Schraubverschluss. Beispielsweise kann die Verschließvorrichtung eine PET-Flaschen-Verschließvorrichtung sein. Die Verschließvorrichtung kann vorzugsweise als eine Rundläufer-Verschließvorrichtung ausgeführt sein. Die Verschließvorrichtung kann mehrere Verschließstationen zum gleichzeitigen bzw. zeitlich überlappenden Verschließen mehrerer Behälter aufweisen. Jede Verschließstation kann eine Klammereinrichtung 14 aufweisen. Bspw. können die Verschließstationen und deren Klammereinrichtungen 14 verteilt um einen Umfang der als Verschließerkarussell ausgeführten Verschließvorrichtung angeordnet sein. Die Verschließvorrichtung kann bezüglich eines Behälterstroms stromabwärts von einer Füllvorrichtung zum Füllen der Behälter mit einem bspw. flüssigen oder pastösen Füllgut angeordnet sein.

Die Figur 2 zeigt beispielhaft die Klammereinrichtung 14 und einen rein schematisch angedeuteten Verschließerkopf 15 als ein bevorzugtes Beispiel einer Behälterbehandlungseinrichtung einer (Behandlungs-) Station 12. Der Verschließerkopf 15 kann einen Behälterverschluss V auf den Behälter B applizieren, vorzugsweise aufschrauben, während der Behälter B von der Klammereinrichtung 14 gehalten ist. Bevorzugt kann die Klammereinrichtung 14 zum zentrierten Positionieren des Behälters B unterhalb von dem Verschließerkopf 15 angeordnet sein.

Nachfolgend ist die beispielhafte Klammereinrichtung 14 unter Bezugnahme auf die Figuren 2 bis 5, die unterschiedliche Ansichten der beispielhaften Klammereinrichtung 14 zeigen, beschrieben.

Die Klammereinrichtung 14 kann auch als Greifvorrichtung, vorzugsweise Seitengreifvorrichtung (engl. side gripper device), bezeichnet werden. Die Klammervorrichtung 14 ist zum Halten eines Behälters B im Bereich seines Tragrings T (nur in den Figuren 2, 4 und 5 dargestellt) ausgebildet. Bevorzugt ist der Tragring T im Halsbereich bzw. Neckbereich des Behälters B angeordnet. Die Klammereinrichtung 14 kann entsprechend auch als eine Neckhandling-Klammereinrichtung bezeichnet werden.

Die Klammereinrichtung 14 weist ein Klammerarmpaar 16, 18 und ein Eingreifarm 40 mit mindestens einem Eingreifelement 42 auf.

Das Klammerarmpaar 16, 18 ist durch zwei Klammerarme 16 und 18 gebildet. Die Klammerarme 16, 18 können den Behälter B gemeinsam zwischen sich halten. Die Klammerarme 16, 18 können den Tragring T des Behälters B von unten abstützen.

Die Klammerarme 16, 18 können auch als Greiferarme bezeichnet werden. Die Klammerarme 16, 18 können im Wesentlichen in einer gemeinsamen Horizontalebene ausgerichtet sein.

Die zwei Klammerarme 16 und 18 sind zum Halten und Freigeben eines Behälters B relativ zueinander bewegbar, vorzugsweise gegensinnig zueinander. Die zwei Klammerarme 16, 18 sind in einer gemeinsamen Klammerarmebene bewegbar. Die Bewegungskurven der Klammerarme 16, 18 liegen in der gemeinsamen Klammerarmebene. Bevorzugt ist die Klammerarmebene horizontal ausgerichtet.

Bevorzugt sind die Klammerarme 16 und 18 schwenkbar. Vorzugsweise sind die Klammerarme 16 und 18 gegensinnig zueinander schwenkbar. Vorzugsweise sind die Klammerarme 16 und 18 um zueinander parallel beabstandete Schwenkachsen schwenkbar. Die Schwenkachsen können vorzugsweise vertikal verlaufen. Bevorzugt sind die Schwenkachsen durch Wellen ausgebildet. Es ist auch möglich, dass die zwei Klammerarme 16, 18 um eine gemeinsame, vorzugsweise vertikale, Schwenkachse schwenkbar sind, die bspw. als eine Welle ausgebildet sein kann.

Vorzugsweise können die Klammerarme 16 und 18 zwischen einer Offenstellung / Freigabestellung (nicht gesondert in den Figuren dargestellt) und einer Schließstellung / Haltestellung (siehe Figuren 2 bis 5) bewegbar, bevorzugt schwenkbar, sein, z. B. mittels der besagten Welle(n).

Die Klammerarme 16, 18 können einteilig oder - wie in den Figuren 2 bis 5 dargestellt - bevorzugt mehrteilig sein.

Beispielsweise können die Klammerarme 16, 18 jeweils einen Klammerarmkörper 20, 22 und bspw. einen Verbindungskörper 36, 38 aufweisen.

Mittels der Klammerarmkörper 20, 22 kann der Behälter B an dem Tragring T kontaktiert und gehalten werden. Im Einzelnen können die Klammerarmkörper 20, 22 bevorzugt jeweils einen Stützabschnitt 24, 26 zum Abstützen des Tragrings T aufweisen.

Die Stützabschnitte 24, 26 können an einem freien Ende des jeweiligen Klammerarms 16, 18 angeordnet sein. Die Stützabschnitte 24, 26 können gekrümmt, vorzugsweise gebogen, sein. Bevorzugt sind die Stützabschnitte 24, 26 jeweils ringsegmentförmig. Die Stützabschnitte 24, 26 können jeweils zum abschnittsweisen Umgreifen eines Halsbereichs des Behälters B direkt unterhalb des Tragrings T geformt sein. Die Stützabschnitte 24, 26 können einander gegenüberliegen.

Bevorzugt können die Stützabschnitte 24, 26 jeweils eine oberseitige Stützfläche 28, 30 aufweisen. Mittels der Stützflächen 28, 30 kann der Tragring T von unten abgestützt werden. Im Einzelnen kann eine Unterseite des Tragrings T auf den Stützflächen 28, 30 aufliegen, wenn ein Behälter B von der Klammereinrichtung 14 gehalten wird. Die Stützflächen 28, 30 können vorzugsweise plan / eben sein. Beispielsweise können die Stützflächen 28, 30 frei von Schneidelementen, Spikes oder anderen Eingreifelementen zum Eingreifen in den Behälter B, d.h. in das Material des Behälters B hinein, sein. Die Stützflächen 28, 30 können bevorzugt horizontal ausgerichtet sein.

Vorzugsweise können die Stützabschnitte 24, 26 jeweils eine Kontaktfläche 32, 34 zum Kontaktieren eines Halsbereichs des Behälters B direkt unterhalb des Tragrings T aufweisen. Die Kontaktflächen 32, 34 können vorzugsweise innenseitig an den Klammerarmen 16, 18 bzw. den Klammerarmkörpern 20, 22 angeordnet sein. Die Kontaktflächen 32, 34 können einander gegenüberliegen. Beispielsweise können die Kontaktfläche 32, 34 frei von Schneidelementen, Spikes oder anderen Eingreifelementen zum Eingreifen in den Behälter B, d.h. in das Material des Behälters B hinein, sein. Die Kontaktflächen 32, 34 können bevorzugt vertikal ausgerichtet sein. Die Kontaktflächen 32, 34 können vorzugsweise zylindermantelsegmentförmig oder konusmantelsegmentförmig sein.

Die Kontaktflächen 32, 34 können an die Stützfläche 28, 30 des jeweiligen Stützabschnitts 24, 26 angrenzen. Bevorzugt kann ein Winkel zwischen der Kontaktfläche 32 bzw. 34 und der Stützfläche 28 bzw. 30 rund 90° betragen.

Die Klammerarmkörper 20, 22 können an dem Verbindungskörper 36, 38 des jeweiligen Klammerarms 16, 18 (z. B. lösbar) befestigt sein. Bevorzugt können die Klammerarmkörper 20, 22 mit dem jeweiligen Verbindungskörper 36, 38 verschraubt sein. Die Klammerarmkörper 20, 22 können auf einer Oberseite des jeweiligen Verbindungskörper 36, 38 aufliegen. Alternativ könnten der Klammerarmkörper 20 und der Verbindungskörper 36 bspw. integral einstückig ausgeführt sein, und der Klammerarmkörper 22 und der Verbindungskörper 38 könnten bspw. integral einstückig ausgeführt sein.

Die Verbindungskörper 36, 38 können die Klammerarmkörper 20, 22 mit einer jeweiligen Welle verbinden. Mittels der Wellen können die Klammerarme 16, 18 schwenkbar sein. Eine Drehung der Wellen kann ein Verschwenken der Klammerarme bewirken. Bevorzugt können Längssachsen der Welle Schwenkachsen der Klammerarme 16, 18 sein. Die Schwenkachsen bzw. die Längsachsen können im Wesentlichen vertikal ausgerichtet sein. Die Wellen können parallel zueinander verlaufen. Eine Drehung der Wellen kann von einer Betätigungseinrichtung bewirkt sein. Die Betätigungseinrichtung kann auf jegliche Weise ausgeführt sein z. B. wie in der EP 4 335 784 A1 ausgeführt ist, die hierin durch Bezugnahme bezüglich der Ausbildung der Betätigungseinrichtung und der Aufhängung mitaufgenommen ist.

Der Verbindungskörper 36 kann den Klammerarmkörper 20 tragen. Der Verbindungskörper 38 kann den Klammerarmkörper 22 tragen. Die Verbindungskörper 36, 38 können an der jeweiligen Welle befestigt sein, z. B. von unten. Beispielsweise können die Verbindungskörper 36, 38 mittels eines jeweiligen Befestigungselements (z. B. Schraube) an der jeweiligen Welle befestigt, vorzugsweise verschraubt, sein.

Der Eingreifarm 40 ist zwischen den zwei Klammerarmen 16, 18 angeordnet. Bevorzugt ist der Eingreifarm 40 mittig zwischen den zwei Klammerarmen 16, 18 angeordnet.

Der Eingreifarm 40 weist das mindestens eine Eingreifelement 42 auf. Beispielsweise kann der Eingreifarm 40 eins, zwei oder drei Eingreifelemente 42 aufweisen. Das mindestens eine Eingreifelement 42 kann nach oben gerichtet sein. Das mindestens eine Eingreifelement 42 kann an einem freien Ende des Eingreifarms 40 angeordnet sein, z. B. an einer Oberseite des Eingreifarms 40.

Sofern nur ein einziges Eingreifelement 42 umfasst ist, kann dieses eine Eingreifelement 42 bspw. bezüglich einer Querachse des Eingreifarms 40 mittig an dem Eingreifarm 40 angeordnet sein, z. B. an einer Spitze des Eingreifarms. Sofern mehrere Eingreifelemente 42 umfasst sind, können diese mehreren Eingreifelemente 42 bspw. bezüglich einer Querachse des Eingreifarms 40 beabstandet voneinander angeordnet sein, z. B. entlang einer gebogenen (z. B. Kreissegment-) Linie und/oder entlang oder folgend einer konkav geformten Stirnseite des Eingreifarms 40.

Das mindestens eine Eingreifelement 42 kann in den Tragring T eingreifen / eindringen, z. B. einschneiden. Beispielsweise kann das mindestens eine Eingreifelement 42 ein Spike (Dorn) oder ein Schneidelement sein. Im Einzelnen kann das mindestens eine Eingreifelement 42 von unten in den Tragring T des von dem Klammerarmpaar 16, 18 gehaltenen Behälters B eindringen, wenn der Eingreifarm 40 hin zu dem Tragring T bewegt wird. Das mindestens eine Eingreifelement 42, das in den Tragring T eingreift, kann den gehaltenen Behälter B verdrehsichern.

Wie bereits erwähnt, ist der Eingreifarm 40 zum Eingreifen des mindestens einen Eingreifelements 42 in den Tragring T bewegbar. Besonders bevorzugt ist der Eingreifarm 40 (z. B. nur) schwenkbar. Bevorzugt ist der Eingreifarm 40 um eine horizontale Schwenkachse 44 der Klammereinrichtung 14 schwenkbar. Es ist jedoch bspw. auch denkbar, dass der Eingreifarm 40 nur linear / translatorisch bewegbar ist, z. B. in einer Vertikalrichtung. Auch möglich sind kombinierte Bewegungen aus einem Linearanteil und einem Schwenkanteil. Allgemein ist der Eingreifarm 40 bevorzugt in einer (z. B. vertikalen) Bewegungsebene bewegbar, die angewinkelt, vorzugsweise senkrecht, zu der (z. B. horizontalen) Klammerarmebene ist, in der die Klammerarme 16, 18 bewegbar sind.

Bevorzugt kann der Eingreifarm 40 mittels eines Hebelmechanismus 46 schwenkbar sein. Der Hebelmechanismus 46 kann bspw. auch als Wippenmechanismus bezeichnet werden. Der Hebelmechanismus 46 ist bevorzugt ein zweiarmiger Hebelmechanismus (z. B. Kipphebelmechanismus), wie in den Figuren 2 bis 5 beispielhaft dargestellt ist. Alternativ kann der Hebelmechanismus 46 bspw. ein einarmiger Hebelmechanismus (z. B. Schlepphebelmechanismus) sein. Bevorzugt kann der Eingreifarm 40 selbst einen Hebelarm des Hebelmechanismus 46 bilden.

Der Hebelmechanismus 46 kann die Schwenkachse 44 aufweisen. Beispielsweise kann die Schwenkachse 44 bezüglich einer Längsachse des Hebelmechanismus 46 mittig in/an dem Hebelmechanismus 46 angeordnet sein, z. B. wenn der Hebelmechanismus 46 ein zweiarmiger Hebelmechanismus ist. Alternativ kann die Schwenkachse 44 bezüglich einer Längsachse des Hebelmechanismus 46 bspw. endseitig in/an dem Hebelmechanismus 46 angeordnet sein, z. B. wenn der Hebelmechanismus 46 ein einarmiger Hebelmechanismus ist.

Vorzugsweise kann der Hebelmechanismus 46 mittels eines Stößels 48 der Klammereinrichtung 14 betätigbar sein. Der Stößel 48 kann bspw. linear bewegbar sein, bevorzugt in einer Vertikalrichtung bzw. entlang einer Vertikalachse. Beispielsweise kann eine Bewegung des Stößels 48 vertikal nach unten auf den Hebelmechanismus 46 bewirken, dass der Eingreifarm 40 nach oben schwenkt. Andererseits kann bspw. eine Bewegung des Stößels 48 vertikal nach oben weg von dem Hebelmechanismus 46 bewirken, dass der Eingreifarm 40 nach unten schwenkt.

Bevorzugt kann der Stößel 48 an einem dem Eingreifarm 40 entgegengesetzten Ende des Hebelmechanismus 46 angeordnet sein. Beispielsweise kann der Stößel 48 oberhalb von dem Hebelmechanismus 46 angeordnet sein.

Bevorzugt ist der Stößel 48 gelenkig mit dem Hebelmechanismus 46 verbunden. Beispielsweise können der Stößel 48 und der Hebelmechanismus 46 über ein schwenkbares Gelenk miteinander verbunden sein (nicht im Detail in den Figuren dargestellt).

Vorzugsweise kann der Stößel 48 bspw. ein unterer Endbereich einer Steuerstange 50 der Klammereinrichtung 14 sein. Die Steuerstange 50 ist vorzugsweise linear bewegbar, z. B. entlang einer Vertikalachse. Die Steuerstange 50 kann bspw. mittels einer Steuerkurve bewegbar sein. Ein (z. B. Höhen-) Verlauf der Steuerkurve kann bspw. mittels eines Steuerkurvenfolgers (z. B. einer Rolle) in eine (z. B. Vertikal-) Bewegung der Steuerstange 50 übersetzt werden, z. B. bei Drehung der gesamten Vorrichtung 10 um die Hauptdrehachse (siehe Figur 1).

Bevorzugt kann der Eingreifarm 40 bewegbar, vorzugsweise schwenkbar, von unten an einem Trägerteil 52 der Klammereinrichtung 14 getragen sein. Beispielsweise kann der Eingreifarm 40 über die Schwenkachse 44 und/oder den Hebelmechanismus 46 von unten an dem Trägerteil 52 getragen sein. Beispielsweise kann die Schwenkachse 44 lösbar oder fest mit dem Trägerteil 52 verbunden sein.

Die Klammerarme 16, 18 und der Eingreifarm 40 können bevorzugt unterhalb von dem Trägerteil 52 angeordnet sein. Bevorzugt kann mindestens eines von die Schwenkachse 44, der Hebelmechanismus 46, der Stößel 48 und das Gelenk unterhalb von dem Trägerteil 52 angeordnet sein. Das Trägerteil 52 kann vorzugsweise mindestens eine Durchführung aufweisen, z. B. für die Welle(n) und/oder die Steuerstange 50.

Das Trägerteil 52 kann bspw. zur Montage der Klammereinrichtung 14 ausgebildet sein. Das Trägerteil 52 ist bevorzugt plattenförmig. Vorzugsweise kann das Trägerteil 52 als eine Montageplatte ausgeführt sein. Das Trägerteil 52 kann die Klammereinrichtung 14 bevorzugt an einem bewegbaren Förderabschnitt (nicht dargestellt) anbringen, vorzugsweise mittels einer Schraubverbindung. Beispielsweise kann das Trägerteil 52 die Klammereinrichtung 14 an einem drehbaren Teil eines Behältertransportkarussells oder eines Behälterbehandlungskarussells, vorzugsweise Verschlie-ßerkarussells, anbringen. Bevorzugt kann das Trägerteil 52 von unten an dem bewegbaren Förderabschnitt, z. B. den drehbaren Teil, montiert werden. Das Trägerteil 52 kann mittels einer Überkopf-Montage an einem Träger der Behältertransport- und/oder Behälterbehandlungsvorrichtung 10 montiert werden.

Bevorzugt können die zwei Klammerarme 16, 18 allgemein zum Ergreifen des Behälters aufeinander zubewegbar sein, ohne dass der Eingreifarm 40 bewegt wird. Der Eingreifarm 40 kann zum Eingreifen des mindestens einen Eingreifelements 42 in den Tragring T bewegbar sein, wenn die zwei Klammerarme 16, 18 in einer Schließstellung sind.

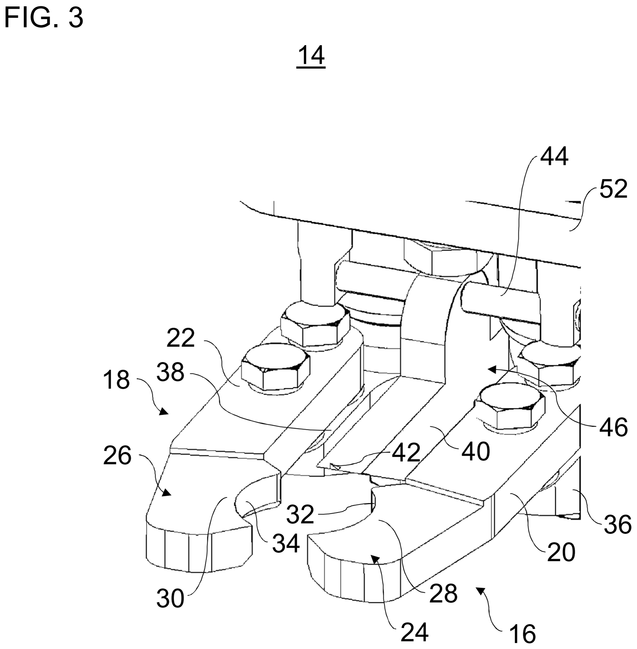

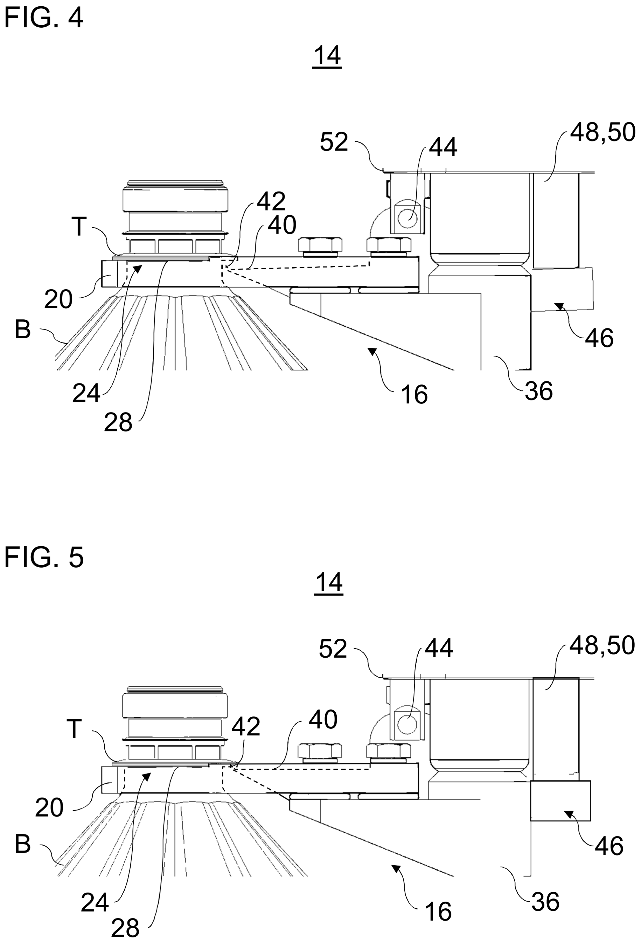

Beispielhaft zeigt die Figur 4, wie der Behälter B bereits am Tragring T mittels der in der Schließstellung positionierten Klammerarme 16, 18 gehalten ist. Die zwei Klammerarme 16, 18 können den Tragring T von unten über die Stützflächen 28, 30 abstützen. Die Klammerarme 16, 18 können die Behälter B auch seitlich in dem Halsbereich direkt unterhalb des Tragrings T mittels der Kontaktflächen 32, 34 (siehe Figur 3) abstützen. Das mindestens eine Eingreifelement 42 (in Figur 4 gestrichelt dargestellt im Bereich des Tragrings T wegen Verdeckung durch den Klammerarmkörper 20) greift noch nicht in den Tragring T ein.

Beispielhaft zeigt die Figur 5, wie der Behälter B immer noch am Tragring T mittels der in der Schließstellung positionierten Klammerarme 16, 18 gehalten ist. Das mindestens eine Eingreifelement 42 (gestrichelt dargestellt im Bereich des Tragrings T wegen Verdeckung durch den Klammerarmkörper 20) ist nach einer entsprechenden Bewegung des Eingreifarms 40 nunmehr von unten in Eingriff mit dem Tragring T. Das mindestens eine Eingreifelement 42 kann in eine Unterseite des Tragrings T eingreifen. Beispielsweise kann das mindestens eine Eingreifelement 42 von unten in den Tragring T einschneiden. Der Behälter B ist somit vorzugsweise verdrehgesichert gehalten.

Bevorzugt kann der Behälter B, in dessen Tragring T das mindestens eine Eingreifelement 42 eingreift, mittels einer Behandlungseinrichtung, vorzugsweise des Verschließerkopfes 15 (siehe Figur 2), der Vorrichtung 10 behandelt, z. B. verschlossen, werden. Nach der Behandlung kann der Eingreifarm 40 von dem Tragring T zum Entfernen des mindestens einen Eingreifelements 42 aus dem Tragring T wegebewegt werden, z. B. mittels des Hebelmechanismus 46 und/oder der Steuerstange 50. Bevorzugt geschieht dies, bevor die zwei Klammerarme 16, 18 zum Freigeben des Behälters B bewegt, z. B. auseinandergeschwenkt, werden.

Prinzipiell ist es möglich, dass der Eingreifarm 40 und die zwei Klammerarme 16, 18 (vollkommen) unabhängig voneinander bewegbar sind.

Alternativ ist es bspw. möglich, dass der Eingreifarm 40 und die zwei Klammerarme 16, 18 derart mechanisch miteinander gekoppelt sind, dass die zwei Klammerarme 16, 18 in eine Schließstellung bewegbar sind, bevor sich der Eingreifarm 40 so bewegt, dass das mindestens eine Eingreifelement 42 von unten in der Tragring T eingreift.

Beispielsweise kann mittels der bereits erwähnten Steuerstange 50 eine derartige mechanische Kopplung zwischen dem Eingreifarm 40 und der zwei Klammerarme 16, 18 vorgesehen sein. Die Steuerstange 50 kann mit den zwei Klammerarmen 16, 18 zum Bewegen, vorzugsweise Schwenken, der zwei Klammerarme 16, 18 mechanisch gekoppelt oder koppelbar sein, z. B. mittels der bereits erwähnten Betätigungseinrichtung. Die Steuerstange 50 kann auch mit dem Eingreifarm 40 zum Bewegen, vorzugsweise Schwenken, des Eingreifarms 40 mechanisch gekoppelt oder koppelbar sein, wie in den Figuren 2, 4 und 5 beispielhaft dargestellt ist.

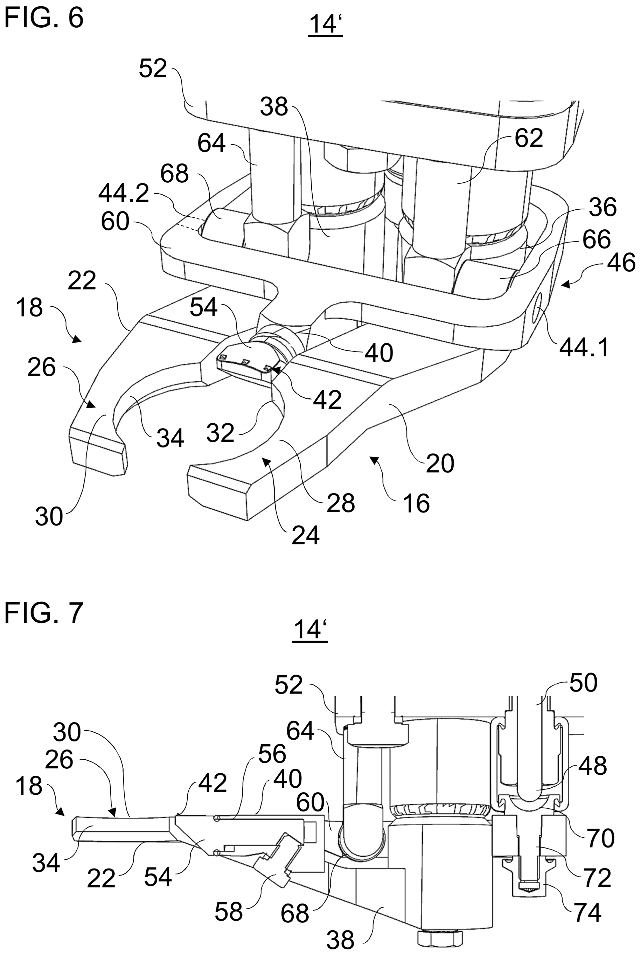

Die Figuren 6 und 7 zeigen eine modifizierte Klammereinrichtung 14'. Die nachfolgend für die Klammereinrichtung 14' erläuterten Merkmale sind mit der zuvor beispielhaft erläuterten Klammereinrichtung 14 kombinierbar und umgekehrt, einzeln oder in jeglicher Kombination
Bevorzugt kann der Eingreifarm 40 einen lösbaren Einsatz 54 und/oder einen im Wesentlichen rahmenförmigen Abschnitt 60 aufweisen.

Der Einsatz 54 kann das mindestens eine Eingreifelement 42 aufweisen. Bevorzugt kann das mindestens eine Eingreifelement 42 an einem vorderen bzw. freien Ende des Einsatzes 54 angeordnet sein, z. B. an einer Vorderkante und/oder Oberseite des Einsatzes 54.

Der Einsatz 54 ist bevorzugt länglich. Der Einsatz 54 kann ein vorderes Ende bzw. eine Eingreifende des Eingreifarms 40 bilden.

Der Einsatz 54 kann lösbar mit einer Aufnahme 56 des Eingreifarms 40 verbunden sein. Bevorzugt kann der Einsatz 54 teilweise in der Aufnahme 56 aufgenommen sein. Die Aufnahme 56 kann bspw. als ein Loch, z. B. ein Sackloch, ausgeführt sein.

Beispielsweise kann der Einsatz 54 mittels einer lösbaren Befestigung, z. B. einer Verschraubung, in der Aufnahme 56 lösbar aufgenommen sein. Bevorzugt kann ein lösbares Befestigungselement 58 den Einsatz 54 in der Aufnahme 56 sichern. Das Befestigungselement 58 kann bspw. in den Einsatz 54 und/oder die Aufnahme 56 eingreifen. Bevorzugt ist das Befestigungselement 58 eine Schraube.

Der Abschnitt 60 kann bspw. im Wesentlichen rechteckrahmenförmig sein. Der Abschnitt 60 kann die Verbindungskörper 36, 38 umgeben. Die Verbindungskörper 36, 38 können abschnittsweise innerhalb einer, vorzugsweise zentralen, Ausnehmung des Abschnitts 60 angeordnet sein und/oder sich durch die Ausnehmung hindurcherstrecken. Alternativ oder zusätzlich können bspw. die Wellen zum Schwenken der Klammerarme 16, 18 abschnittsweise in der Ausnehmung angeordnet sein bzw. der Abschnitt 60 kann die Wellen umgeben. Der Abschnitt 60 und dessen Ausnehmung können im Wesentlichen horizontal ausgerichtet sein.

Bevorzugt ist der Abschnitt 60 schwenkbar gelagert. Beispielsweise kann der Abschnitt 60 rahmeninnenseitig schwenkbar gelagert sein. Eine Schwenkachse 44.1 und eine weitere Schwenkachse 44.2 können miteinander fluchtend bzw. koaxial ausgerichtet sein. Die Schwenkachsen 44.1 und 44.2 können bspw. als Zapfen, Pins oder Stifte ausgeführt sein. Die Schwenkachsen 44.1 und 44.2 können in einander gegenüberliegenden Schenkeln des im Wesentlichen rahmenförmigen Abschnitts 60 eingesteckt sein.

Die Schwenkachsen 44.1 und 44.2 können mit Tragelementen 62, 64 verbunden sein. Im Einzelnen kann die Schwenkachse 44.1 mit dem Tragelement 62 verbunden sein, und die Schwenkachse 44.2 kann mit dem Tragelement 64 verbunden sein. Die Tragelemente 62, 64 können unterhalb von dem Trägerkörper 52 angeordnet sein. Bevorzugt sind die Tragelemente 62, 64 lösbar an dem Trägerkörper 52 befestigt, z. B. mittels Schraubverbindung(en). Die Tragelemente 62, 64 sind bevorzugt länglich und vertikal ausgerichtet.

Zwischen den Tragelementen 62, 64 und dem jeweiligen Schenkel des Abschnitts 60 kann bspw. jeweils mindestens eine Scheibe 66, 68 (z. B. Distanzscheibe und/oder Anlaufscheibe) angeordnet sein. Die Schwenkachsen 44.1 und 44.2 können sich durch die Scheiben 66, 68 hindurcherstrecken. Im Einzelnen kann sich die Schwenkachse 44.1 durch die Scheibe 66 erstrecken, und die weitere Schwenkachse 44.2 kann sich durch die Scheibe 68 erstrecken.

Wie ferner beispielhaft in der Figur 7 dargestellt ist, kann der Stößel 48 in Eingriff mit einer Lagerpfanne 70 gebracht werden. Die Lagerpfanne 70 ist bevorzugt schalenförmig oder kugelsegmentförmig. Beispielsweise kann der Stößel 48 von oben in die Lagerpfanne 70 bewegt werden.

Bevorzugt kann die Lagerpfanne 70 in einem Verbindungselement 72 umfasst sein. Beispielsweise kann die Lagerpfanne 70 an einer Oberseite oder einem Kopf des Verbindungselements 72 angeordnet sein. Das Verbindungselement 72 kann lösbar an dem Eingreifarm 40 befestigt sein. Beispielsweise kann das Verbindungselement 72 in ein Loch, vorzugsweise Durchgangsloch, des Eingreifarms 40 eingesteckt sein, z. B. von oben. Die lösbare Befestigung kann bspw. mittels einer Verschraubung erfolgen, z. B. mittels eines separaten Verschraubungselements 74. Bevorzugt ist das Befestigungselement 72 an einem dem mindestens einen Eingreifelement 42 entgegengesetzten Ende des Eingreifarms 40 angeordnet.

Alternativ kann die Lagerpfanne 70 bspw. in dem Eingreifarm 40 integriert sein, z. B. an einem dem mindestens einen Eingreifelement 42 entgegengesetzten Ende des Eingreifarms 40.

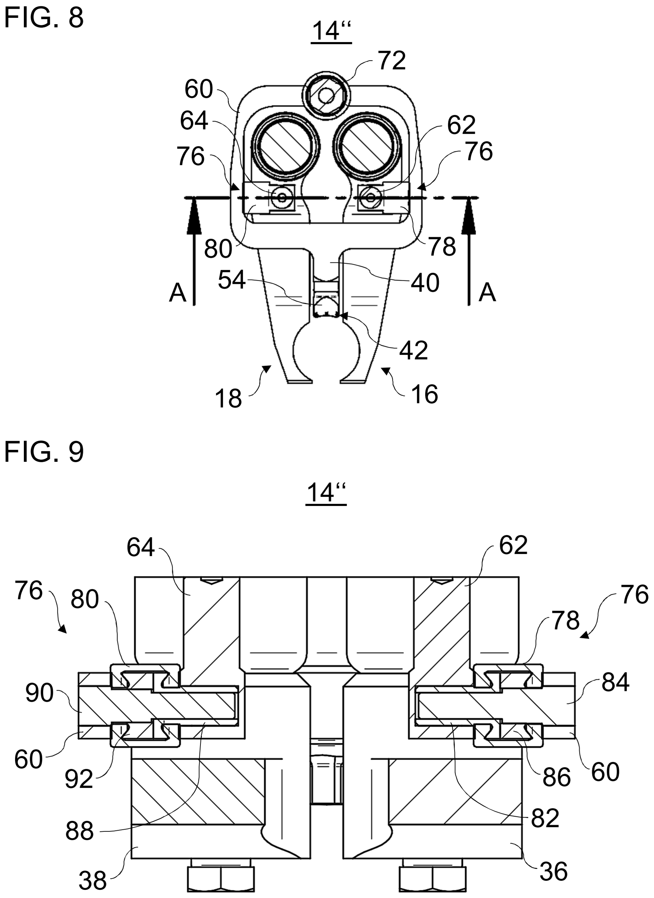

Die Figuren 8 und 9 zeigen eine Klammereinrichtung 14" mit einem Schwenkmechanismus 76. Figur 9 zeigt dabei einen Schnitt entlang einer Linie A-A in Figur 8.

Der Schwenkmechanismus 76 kann den Eingreifarm 40 (z. B. horizontal) schwenkbar mit den Tragelementen 62, 64 verbinden. Bevorzugt kann der Schwenkmechanismus 76 den im Wesentlichen rahmenförmigen Abschnitt 60 des Eingreifarms 40 schwenkbar an den Tragelementen 62, 64 lagern.

Vorzugsweise kann der Schwenkmechanismus 76 mittels mindestens eines hülsenförmigen elastischen Elements 78, 80 abgedichtet sein. Das Element 78, 80 ist bevorzugt ein Balg, besonders bevorzugt ein Torsionsbalg. Vorzugsweise kann sich der Schwenkmechanismus 76 durch das mindestens eine Element 78, 80 hindurcherstrecken. Beispielsweise kann eine Endseite des Elements 78 abgedichtet an dem Tragelement 62 anliegen, und eine entgegengesetzte Endseite des Elements 78 kann abgedichtet an dem Abschnitt 60 anliegen, z. B. an einer Innenseite des Abschnitts 60. Beispielsweise kann eine Endseite des Elements 80 abgedichtet an dem Tragelement 64 anliegen, und eine entgegengesetzte Endseite des Elements 80 kann abgedichtet an dem Abschnitt 60 anliegen, z. B. an einer Innenseite des Abschnitts 60.

Beispielsweise kann der Schwenkmechanismus 76 eine Hülse 82, einen Zapfen 84 und einen Ringkörper 86 aufweisen.

Die Hülse 82 kann sich in ein Loch, z. B. Sackloch, des Tragelements 62 erstrecken. Bevorzugt ist die Hülse 82 in das Loch eingesteckt. Vorzugsweise kann die Hülse 82 drehfest in dem Loch gesichert sein, z. B. über eine Mehrkantverbindung zwischen einem Außenmantel der Hülse 82 und einer Umfangswand des Lochs.

Die Hülse 82 kann einen umlaufenden Kragen aufweisen. Der Kragen kann bspw. an einer Endseite der Hülse außerhalb des Lochs des Tragelements 62 angeordnet sein. Der Kragen kann vorzugsweise einen ersten Flanschabschnitt des Elements 78 axial und radial an dem Tragelement 62 sichern. Beispielsweise kann der erste Flanschabschnitt als ein umlaufender Innenkragen des Elements 78 geformt sein.

Vorzugsweise kann der erste Flanschabschnitt des Elements 78 axial zwischen dem Tragelement 62 und dem Kragen der Hülse 82 eingespannt sein. Bevorzugt kann der erste Flanschabschnitt des Elements 78 dadurch drehfest mit dem Tragelement 62 und der Hülse 82 verbunden sein. Das hülsenförmige elastische Element 78 kann den Kragen umhüllen.

Der Zapfen 84 kann sich in die Hülse 82 erstrecken. Vorzugsweise ist der Zapfen 84 drehbar in der Hülse 82 gelagert, z. B. über Gleitflächen. Der Zapfen 84 kann auch drehfest und axial gesichert mit dem im Wesentlichen rahmenförmigen Abschnitt 60 verbunden sein. Beispielsweise kann ein Kopf des Zapfens 84 in ein Durchgangsloch des Abschnitts 60 eingepresst, eingeschrumpft und/oder eingeschweißt sein.

Der Ringkörper 86 kann auf dem Zapfen 84 sitzen. Vorzugsweise kann der Ringkörper 86 drehfest auf dem Zapfen 84 sitzen, z. B. über eine Mehrkantverbindung zwischen einem Außenmantel des Zapfens 84 und einer Innenumfangsfläche des Ringkörpers 86.

Bevorzugt kann der Ringkörper 86 einerseits gleitend an der Hülse 82, z. B. deren Kragen, anliegen und andererseits einen zweiten Flanschabschnitt des Elements 78 axial und radial an dem Abschnitt 60 sichern. Der zweite Flanschabschnitt kann an einem der ersten Flanschabschnitt entgegengesetzten Ende des Elements 78 angeordnet sein. Beispielsweise kann der zweite Flanschabschnitt als ein umlaufender Innenkragen des Elements 78 geformt sein.

Vorzugsweise kann der zweite Flanschabschnitt des Elements 78 axial zwischen dem Ringkörper 86 und dem Abschnitt 60 eingespannt sein. Bevorzugt kann der zweite Flanschabschnitt des Elements 78 dadurch drehfest mit dem Ringkörper 86 und dem Abschnitt 60 (und damit mit dem Zapfen 84) verbunden sein. Das hülsenförmige elastische Element 78 kann den Ringkörper 86 umhüllen.

Beim Schwenken des Eingreifarms 40 kann sich der Zapfen 84 in der Hülse 82 drehen. Dabei kann sich vorzugsweise ein Mittelabschnitt des hülsenförmigen elastischen Elements 78 zwischen den jeweils drehfest angebundenen Flanschabschnitten des Elements 78 verdrehen (tordieren). Das elastische Element 78 kann damit den Schwenkmechanismus 76 zwischen dem Abschnitt 60 und dem Tragelement 62 abdichten.

Es ist möglich, dass der Schwenkmechanismus 76 eine weitere Hülse 88, einen weiteren Zapfen 90 und einen weiteren Ringkörper 92 aufweisen kann, die wie die Hülse 82, der Zapfen 84 und der Ringkörper 86 aufgebaut und funktionieren können. Vorzugsweise kann das hülsenförmige elastische Element 80 die Schwenklagerung 76 zwischen dem Abschnitt 60 und dem Tragelement 64 abdichten, wie für das Element 78 beschrieben.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Klammerarme und/oder des Eingreifarms des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

| | | | |
|---|---|---|---|
| 10 | Behältertransport- und/oder Behäl- terbehandlungsvorrichtung | 56 | Aufnahme |
| | | 58 | Befestigungselement |
| 12 | Station | 60 | Abschnitt |
| 14 | Klammereinrichtung | 62 | Tragelement |
| 15 | Verschließerkopf | 64 | Tragelement |
| 16 | Klammerarm | 66 | Scheibe |
| 18 | weiterer Klammerarm | 68 | Scheibe |
| 20 | Klammerarmkörper | 70 | Lagerpfanne |
| 22 | weiterer Klammerarmkörper | 72 | Verbindungselement |
| 24 | Stützabschnitt | 74 | Verschraubungselement |
| 26 | weiterer Stützabschnitt | 76 | Schwenkmechanismus |
| 28 | Stützfläche | 78 | hülsenförmiges elastisches Element |
| 30 | weitere Stützfläche | 80 | weiteres hülsenförmiges elastisches Element |
| 32 | Kontaktfläche | | |
| 34 | weitere Kontaktfläche | 82 | Hülse |
| 36 | Verbindungskörper | 84 | Zapfen |
| 38 | weiterer Verbindungskörper | 86 | Ringkörper |
| 40 | Eingreifarm | 88 | weitere Hülse |
| 42 | Eingreifelement | 90 | weiterer Zapfen |
| 44 | Schwenkachse | 92 | weiterer Ringkörper |
| 46 | Hebelmechanismus | | |
| 48 | Stößel | B | Behälter |
| 50 | Steuerstange | V | Behälterverschluss |
| 52 | Trägerteil | T | Tragring |
| 54 | Einsatz | | |

## Patentansprüche

1. Klammereinrichtung (14), vorzugsweise Neckhandling-Klammereinrichtung, zum Halten eines Behälters (B) für eine Behältertransport- und/oder Behälterbehandlungsvorrichtung (10), wobei die Klammereinrichtung (14) aufweist:
ein Klammerarmpaar (16, 18) mit zwei Klammerarmen (16, 18) zum unterseitigen Abstützen eines Tragrings (T) des Behälters (B) zum Halten des Behälters (B), wobei die zwei Klammerarme (16, 18) in einer gemeinsamen Klammerarmebene bewegbar, vorzugsweise schwenkbar, sind; und
einen Eingreifarm (40), der zwischen den zwei Klammerarmen (16, 18) angeordnet ist und mindestens ein Eingreifelement (42) aufweist, wobei der Eingreifarm (40) zum Eingreifen, vorzugsweise Einschneiden, des mindestens einen Eingreifelements (42) von unten in den Tragring (T) des von dem Klammerarmpaar (16, 18) gehaltenen Behälters (B) zum Verdrehsichern des Behälters (B) bewegbar, vorzugsweise schwenkbar, ist.

2. Klammereinrichtung (14) nach Anspruch 1, wobei mindestens eines erfüllt ist von:
die zwei Klammerarme (16, 18) sind um mindestens eine vertikale Schwenkachse der Klammereinrichtung (14) schwenkbar,
der Eingreifarm (40) ist um eine horizontale Schwenkachse (44, 44.1, 44.2) der Klammereinrichtung (14) schwenkbar; und
der Eingreifarm (40) ist in einer Bewegungsebene bewegbar, die angewinkelt, vorzugsweise senkrecht, zu der Klammerarmebene ist.

3. Klammereinrichtung (14) nach Anspruch 1 oder Anspruch 2, wobei mindestens eines erfüllt ist von:
die zwei Klammerarme (16, 18) sind zum Ergreifen des Behälters (B) aufeinander zubewegbar, ohne dass der Eingreifarm (40) bewegt wird; und
der Eingreifarm (40) ist zum Eingreifen des mindestens einen Eingreifelements (42) in den Tragring (T) bewegbar, wenn die zwei Klammerarme (16, 18) in einer Schließstellung sind.

4. Klammereinrichtung (14) nach einem der vorherigen Ansprüche, wobei:
der Eingreifarm (40) und die zwei Klammerarme (16, 18) unabhängig voneinander bewegbar sind; oder
der Eingreifarm (40) und die zwei Klammerarme (16, 18), vorzugsweise mittels einer Steuerstange (50), derart mechanisch miteinander gekoppelt sind, dass die zwei Klammerarme (16, 18) in eine Schließstellung bewegbar sind, bevor sich der Eingreifarm (40) zum Eingreifen des mindestens einen Eingreifelements (42) von unten in der Tragring (T) bewegt.

5. Klammereinrichtung (14) nach einem der vorherigen Ansprüche, wobei mindestens eines erfüllt ist von:
der Eingreifarm (40) ist mittig zwischen den zwei Klammerarmen (16, 18) angeordnet;
das mindestens eine Eingreifelement (42) ist ein Spike oder ein Schneidelement;
das mindestens eine Eingreifelement (42) ist nach oben gerichtet;
das mindestens eine Eingreifelement (42) ist an einem freien Ende des Eingreifarms (40) angeordnet;
der Eingreifarm (40) weist einen lösbaren Einsatz (54) mit dem mindestens einen Eingreifelement (42) auf, wobei vorzugsweise der Einsatz (54) lösbar in einer Aufnahme (56) des Eingreifarms (40) befestigt ist, bevorzugt mittels einer Verschraubung; und
der Eingreifarm (40) weist einen im Wesentlichen rahmenförmigen Abschnitt (60) auf, der, vorzugsweise rahmeninnenseitig, schwenkbar gelagert ist und/oder der zwei Wellen zum Schwenken der zwei Klammerarme (16, 18) und/oder zwei Verbindungskörper (36, 38) zum Verbinden der zwei Klammerarme (16, 18) mit zwei Wellen zum Schwenken der zwei Klammerarme (16, 18) umgibt.

6. Klammereinrichtung (14) nach einem der vorherigen Ansprüche, wobei:
der Eingreifarm (40) bewegbar, vorzugsweise schwenkbar, von unten an einem Trägerteil (52) der Klammereinrichtung (14) getragen ist.

7. Klammereinrichtung (14) nach einem der vorherigen Ansprüche, wobei:
die zwei Klammerarme (16, 18) jeweils einen, vorzugsweise gekrümmten, Stützabschnitt (24, 26) zum unterseitigen Abstützen des Tragrings (T) aufweisen.

8. Klammereinrichtung (14) nach Anspruch 7, wobei mindestens eines erfüllt ist von:
die Stützabschnitte (24, 26) weisen jeweils eine oberseitige, vorzugsweise plane, Stützfläche (28, 30) zum unterseitigen Abstützen des Tragrings (T) auf;
die Stützabschnitte (24, 26) weisen jeweils eine vertikal ausgerichtete Kontaktfläche (32, 34) zum Kontaktieren eines Halsbereichs des Behälters (B) direkt unterhalb des Tragrings (T) auf;
die Stützabschnitte (24, 26) sind jeweils ringsegmentförmig;
die Stützabschnitte (24, 26) sind schneidelementfrei und spikefrei; und
die Stützabschnitte (24, 26) sind jeweils zum abschnittsweisen Umgreifen eines Halsbereichs des Behälters (B) direkt unterhalb des Tragrings (T) geformt.

9. Klammereinrichtung (14) nach einem der vorherigen Ansprüche, ferner aufweisend:
eine, vorzugsweise vertikal, bewegbare Steuerstange (50), die:
- mit den zwei Klammerarmen (16, 18) zum Bewegen, vorzugsweise Schwenken, der zwei Klammerarme (16, 18) mechanisch gekoppelt oder koppelbar ist; und
- mit dem Eingreifarm (40) zum Bewegen, vorzugsweise Schwenken, des Eingreifarms (40) mechanisch gekoppelt oder koppelbar ist.

10. Klammereinrichtung (14) nach einem der vorherigen Ansprüche, wobei
der Eingreifarm (40) mittels eines Hebelmechanismus (46), vorzugsweise einarmiger oder zweiarmiger Hebelmechanismus, der Klammereinrichtung (14) schwenkbar ist, wobei vorzugsweise:
der Eingreifarm (40) einen Hebelarm des Hebelmechanismus (46) bildet.

11. Klammereinrichtung (14) nach Anspruch 10, wobei:
der Hebelmechanismus (46) mittels eines linear bewegbaren Stößels (48) der Klammereinrichtung (14) betätigbar ist.

12. Klammereinrichtung (14) nach Anspruch 11, wobei mindestens eines erfüllt ist von:
der Stößel (48) ist an einem dem Eingreifarm (40) entgegengesetzten Ende des Hebelmechanismus (46) angeordnet;
der Stößel (48) ist oberhalb von dem Hebelmechanismus (46) angeordnet;
der Stößel (48) ist ein Endbereich einer Steuerstange (50) der Klammereinrichtung (14);
der Stößel (48) ist entlang einer Vertikalachse linear bewegbar;
der Stößel (48) ist von oben auf ein Ende des Hebelmechanismus (46) zum Schwenken des Hebelmechanismus (46) bewegbar;
der Stößel (48) ist gelenkig mit dem Hebelmechanismus (46) verbunden; und
der Stößel (48) ist mit einer, vorzugsweise schalenförmigen oder kugelsegmentförmigen, Lagerpfanne (70), die mit dem Eingreifarm (40) verbunden ist, in Eingriff bringbar.

13. Klammereinrichtung (14) nach einem der vorherigen Ansprüche, wobei:
der Eingreifarm (40) mittels eines Schwenkmechanismus (76) mit mindestens einem Tragelement (62, 64) verbunden ist; und
der Schwenkmechanismus (76) mittels mindestens eines hülsenförmigen elastischen Elements (78, 80), vorzugsweise Torsionsbalgs, abgedichtet ist.

14. Behälterbehandlungsvorrichtung (10), vorzugsweise Behälterverschließvorrichtung zum Verschließen von Behältern (B), wobei die Behälterbehandlungsvorrichtung (10) aufweist:
mindestens eine Behandlungsstation (12), vorzugsweise Verschließstation, mit einer Behandlungseinrichtung, vorzugsweise einem Verschließerkopf (15), und einer Klammereinrichtung (14) nach einem der vorherigen Ansprüche,
wobei vorzugsweise:
die Klammereinrichtung (14) zum zentrierten Positionieren des Behälters (B) unterhalb von der Behandlungseinrichtung angeordnet ist.

15. Verfahren zum Betreiben einer Klammereinrichtung (14) nach einem der Ansprüche 1 bis 13 oder einer Behälterbehandlungsvorrichtung (10) nach Anspruch 14, wobei das Verfahren aufweist:
Halten eines Behälters (B) an einem Tragring (T), vorzugsweise Halsring, des Behälters (B) mittels der Klammereinrichtung (14), wobei die zwei Klammerarme (16, 18) den Tragring (T) von unten abstützen; und
Eingreifen, vorzugsweise Einschneiden, des mindestens einen Eingreifelements (42) von unten in den Tragring (T) des gehaltenen Behälters (B) mittels Bewegens, vorzugsweise Schwenkens, des Eingreifarms (40) hin zu dem Tragring (T), vorzugsweise zum Verdrehsichern des gehaltenen Behälters (B).

16. Verfahren nach Anspruch 15, ferner aufweisend mindestens eines von:
Behandeln, vorzugsweise Verschließen, des Behälters (B), in dessen Tragring (T) das mindestens eine Eingreifelement (42) eingreift, vorzugsweise einschneidet, mittels einer Behandlungseinrichtung, vorzugsweise eines Verschließerkopfes (15);
Wegbewegen, vorzugsweise Wegschwenken, des Eingreifarms (40) von dem Tragring (T) nach einem Behandeln des Behälters (B) zum Entfernen des mindestens einen Eingreifelements (42) aus dem Tragring (T), vorzugsweise bevor die zwei Klammerarme (16, 18) zum Freigeben des Behälters (B) bewegt werden; und
Abdichten eines Schwenkmechanismus (76), der den Eingreifarm (40) schwenkbar an mindestens einem Tragelement (62, 64) lagert, mittels mindestens eines hülsenförmigen elastischen Elements (78, 80), vorzugsweise eines Torsionsbalgs.
